# EUROPEAN PATENT SPECIFICATION

(11) **EP 4 280 658 B1**
(45) Date of publication and mention of the grant of the patent: **01.04.2026**
(21) Application number: 22749023.2
(22) Date of filing: 27.01.2022
(51) Int. Cl.: H04W 76/15, H04W 24/10, H04W 64/00

(54) **MEASUREMENT METHOD AND APPARATUS**
MESSVERFAHREN UND -VORRICHTUNG
APPAREIL ET PROCÉDÉ DE MESURE

(30) Priority: 04.02.2021 CN 202110158877
(43) Date of publication of application: 22.11.2023
(73) Proprietor: Vivo Mobile Communication Co., Ltd., Dongguan, Guangdong 523863 (CN)
(72) Inventor: LI, Zhonghuang, Dongguan, Guangdong 523863 (CN)
(74) Representative: Murgitroyd & Company
(86) International application number: PCT/CN2022/074261
(87) International publication number: WO 2022/166744

(56) References cited:
- WO-A1-2020/027615
- WO-A1-2020/167814
- CN-A- 111 641 962
- CN-A- 111 919 469
- CN-A- 113 038 506
- US-A1- 2015 327 104
- US-A1- 2019 296 808

## Description

### TECHNICAL FIELD

This application relates to the field of communications technologies, and in particular, to a measurement method and apparatus, an electronic device, a readable storage medium, a chip and a computer program product.

### BACKGROUND

Currently, in a non-standalone (non-standalone, NSA) architecture network of a 5G network, in a case that the electronic device accesses the LTE cell, an electronic device can adjust a frequency of a receiver of the electronic device from a frequency of an LTE cell to a frequency of a to-be-measured NR cell, to measure the to-be-measured NR cell. If the to-be-measured NR cell does not satisfy a condition for reporting, the electronic device can restore the frequency of the receiver to the frequency of the LTE cell. The above steps are periodically performed based on the measurement gap period until a certain NR cell satisfies the condition for reporting. In this way, the electronic device can perform a registration process for the certain NR cell so that 5G services are accessed.

However, there may be a possibility that the electronic device may need to transmit service data by using a network of the LTE cell, and the electronic device can only transmit the service data after the frequency of the receiver is restored to the frequency of the LTE cell. Therefore, the electronic device needs to wait multiple times based on the measurement gap period for the electronic device to restore the frequency of the receiver to the frequency of the LTE cell to periodically transmit the service data until a certain NR cell satisfies the condition for reporting.

This results in high delay for the electronic device to transmit the service data.

D1 (US20150327104A1) discloses systems and methods for configuring measurement gaps for dual connectivity. User equipment (UE) may be configured to communicatively couple to a plurality of Evolved Universal Terrestrial Radio Access Network (E-UTRAN) Node eNBs. For example, the UE may include a plurality of transceivers, and each transceiver may be coupled to a different cell group. A measurement gap may need to be configured for each transceiver. However, the transceivers may interfere with each other's measurement gaps. In an embodiment, a duration of a measurement gap may be increased over a default value to reduce the number of interruptions per measurement gap. Alternatively, or in addition, measurement gaps may begin and/or end at the same. The measurement gaps may have a same repetition period and be aligned each period. Or, the measurement gaps may have different repetition periods and may or may not align periodically.

D2 (WO2020167814A1) discloses systems and methods for determining a starting point of a measurement gap. For example, the present disclosure is directed to a UE that includes a memory and processor circuitry coupled to the memory. The processor circuitry may be configured to receive an indication of a measurement gap timing advance. The processor circuitry may be further configured to, based on the indication of the measurement gap timing advance, determine a starting point of a measurement gap in a dual connectivity mode that provides dual connectivity with a new radio (NR) and an evolved universal mobile telecommunications system terrestrial radio access (EUTRA). The NR may serve as a master Radio Access Network (RAN) and the EUTRA may serve as a secondary RAN. The processor circuitry may also be configured to perform a signal quality measurement during the measurement gap, where the signal quality measurement is performed on a target cell of the NR or EUTRA.

### SUMMARY

Embodiments of this application are intended to provide a measurement method and apparatus, which can resolve a problem that delay is high when transmission of service data performed by an electronic device.

To resolve the foregoing technical problem, this application is implemented as follows.

According to a first aspect, the embodiments of this application provide a measurement method, which is defined in claim 1.

According to a second aspect, the embodiments of this application provide a measurement apparatus, which is defined in claim 6.

According to a third aspect, the embodiments of this application provide an electronic device, which is defined in claim 11.

According to a fourth aspect, the embodiments of this application provide a readable storage medium, which is defined in claim 12.

According to a fifth aspect, the embodiments of this application provide a chip, which is defined in claim 13.

According to a sixth aspect, the embodiments of this application provide a computer program product, which is defined in claim 14.

Further advantageous embodiments of the present application are indicated in the dependent claims.

It is to be understood that both the foregoing general description and the following detailed description are exemplary only, and are not restrictive of the present application.

### BRIEF DESCRIPTION OF DRAWINGS

FIG. 1 is a schematic diagram of an architecture of a measurement system according to the embodiments of this application;
FIG. 2 is a schematic diagram of a network architecture corresponding to NSA;
FIG. 3 is a first schematic diagram of a measurement method according to the embodiments of this application;
FIG. 4 is a second schematic diagram of a measurement method according to the embodiments of this application;
FIG. 5 is a third schematic diagram of a measurement method according to the embodiments of this application;
FIG. 6 is a fourth schematic diagram of a measurement method according to the embodiments of this application;
FIG. 7 is a schematic structural diagram of a measurement apparatus according to the embodiments of this application;
FIG. 8 is a schematic structural diagram of an electronic device according to the embodiments of this application; and
FIG. 9 is a schematic diagram of hardware of an electronic device according to the embodiments of this application.

### DESCRIPTION OF EMBODIMENTS

The following clearly and completely describes the technical solutions in embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, objects distinguished by "first" and "second" are usually of one category, and a quantity of objects is not limited. For example, a first object may mean one or more objects. In addition, "and/or" in the specification and claims represents at least one of connected objects. Symbol "/" in the specification generally represents an "or" relationship between associated objects.

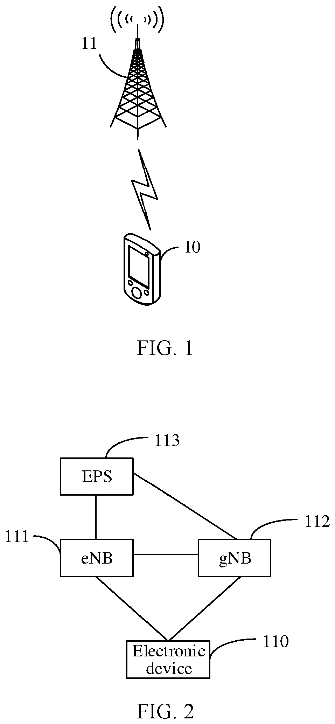

FIG. 1 is a structural diagram of an architecture of a measurement system according to the embodiments of this application. As shown in FIG. 1, the measurement system includes an electronic device 10 and a network device 11. The electronic device 10 may be a mobile communications device, for example, a mobile phone, a tablet computer (tablet personal computer, TPC), a laptop computer (laptop computer, LC), a personal digital assistant (personal digital assistant, PDA), a mobile Internet device (mobile Internet device, MID), or a wearable device (wearable device, WD). It should be noted that a specific type of the electronic device 10 is not limited in the embodiments of this invention. The network device 11 may be a 5G network device (for example, a gNB or a 5G NR NB), a 4G network device (for example, an eNB), a 3G network device (for example, an NB), a network device in a later evolved communications system, or the like. It should be noted that a specific type of the network device 11 is not limited in the embodiments of this application.

Before the technical solution in the embodiments of this application is described in detail, an NSA network architecture of a 5G network defined by 3GPP is briefly described.

FIG. 2 is a schematic diagram of a network architecture corresponding to NSA. As shown in FIG. 2, in the NSA network architecture, an electronic device 110 may be connected to both eNB111 and gNB112. There is an interface between eNB111 and gNB112 for transmitting distributed data. For example, an evolved packet system (evolved packet system, EPS) 113 distributes a portion of downlink data to the gNB112 by using the eNB111, and the downlink data of the eNB111 and the gNB112 is aggregated in the electronic device 110.

The following describes in detail the measurement method provided in the embodiments of this application through specific embodiments and application scenarios thereof with reference to the accompanying drawings.

The measurement method provided in the embodiments of this application may be applied to a scenario in which an electronic device measures a cell.

It is assumed that in an NSA architecture of a 5G network, an electronic device needs to transmit service data by using a network. In related technologies, the electronic device can first search for a LTE cell and then determine whether the LTE cell supports NSA based on EN-DC (E-UTRA-NR Dual Connectivity, E-UTRA-NR Dual Connectivity) indication of the LTE cell. If the LTE cell supports NSA, the electronic device carries indication of dual connectivity with new radio supported (dual connectivity with new radio supported, DCNR) in an attachment request (attach request) message. If the LTE cell allows the electronic device to preform dual connectivity, the network device notifies the electronic device by using an attach accept (attach accept) message and sends measurement configuration information to the electronic device. In this case, the electronic device can first transmit the service data by using a network of the LTE cell, activate a 5G modem (modem) based on the measurement configuration information, and then interrupt transmission of the service data. In addition, a frequency of a receiver of the electronic device can be adjusted from a frequency of the LTE cell to a frequency of a to-be-measured NR cell, so as to measure the to-be-measured NR cell. If the electronic device is located in an area on an edge of the NR cell, there may be a case in which a network signal of the to-be-measured NR cell is poor, which means that all to-be-measured NR cells do not satisfy a condition for reporting. In this way, the electronic device can restore the frequency of the receiver to the frequency of the LTE cell and continue to transmit the service data by using the network of the LTE cell. Then, after the measurement gap period in the measurement configuration information, the electronic device interrupts the transmission of the service data and adjusts the frequency of the receiver of the electronic device from the frequency of the LTE cell to the frequency of the to-be-measured NR cell, so as to measure the to-be-measured NR cell again. The electronic device performs these similar steps until a certain NR cell satisfies the condition for reporting so that the electronic device can send a measurement report to the network device, and the network device can activate a secondary cell group (secondary cell group, SCG) cell (that is, a certain NR cell) based on the measurement report. However, because the electronic device needs to wait for multiple times based on the measurement gap period when the electronic device restores the frequency of the receiver to the frequency of the LTE cell to periodically transmit the service data until a certain NR cell satisfies the condition for reporting, there is higher delay for the electronic device to transmit the service data.

However, in the embodiments of this application, the electronic device can determine: whether the electronic device transmits the service data by using the network of the LTE cell based on the measurement configuration information; whether an identity of a to-be-measured cell in the measurement configuration information matches an identity of the to-be-measured NR cell in the first N pieces of the measurement configuration information (that is, N pieces of the measurement configuration information received by the electronic device before the measurement configuration information is received); and whether a duration between a receiving moment of the measurement configuration information and a receiving moment of the first N pieces of the measurement configuration information is less than or equal to a preset duration. In this way, the electronic device can determine that the electronic device transmits the service data by using the network of the LTE cell, and obtain the first N pieces of measurement location information (that is, location information of the electronic device when the electronic device performs N measurements on the to-be-measured NR cell before the measurement configuration information is received) and N network signal parameters (that is, network signal parameters of the to-be-measured NR cell obtained after the electronic device performs N measurements on the to-be-measured NR cell before the measurement configuration information is received), so that the electronic device can determine whether a location change of the electronic device is less than or equal to a certain threshold based on the N pieces of measurement location information, and whether all the N network signal parameters are less than or equal to another threshold. In this way, if the location change of the electronic device is less than or equal to the certain threshold, and all the N network signal parameters are less than or equal to the another threshold, it can be considered that the electronic device has measured the to-be-measured NR cell multiple times, and the location change of the electronic device is small, and the network signal of the to-be-measured NR cell is poor. In other words, the electronic device may be located in an area on the edge of the NR cell. In this case, the electronic device can increase the measurement gap period, and measure the to-be-measured NR cell based on the measurement gap period after the increase. It may be understood that the measurement gap period after the increase is greater than the measurement gap period before the increase, that is, in a case that the network signal of the to-be-measured NR cell is poor, a duration in which the electronic device transmits the service data after the measurement gap period is increased is greater than a duration in which the electronic device transmits the service data before the measurement gap period is increased. Therefore, the delay for the electronic device to transmit the service data can be reduced.

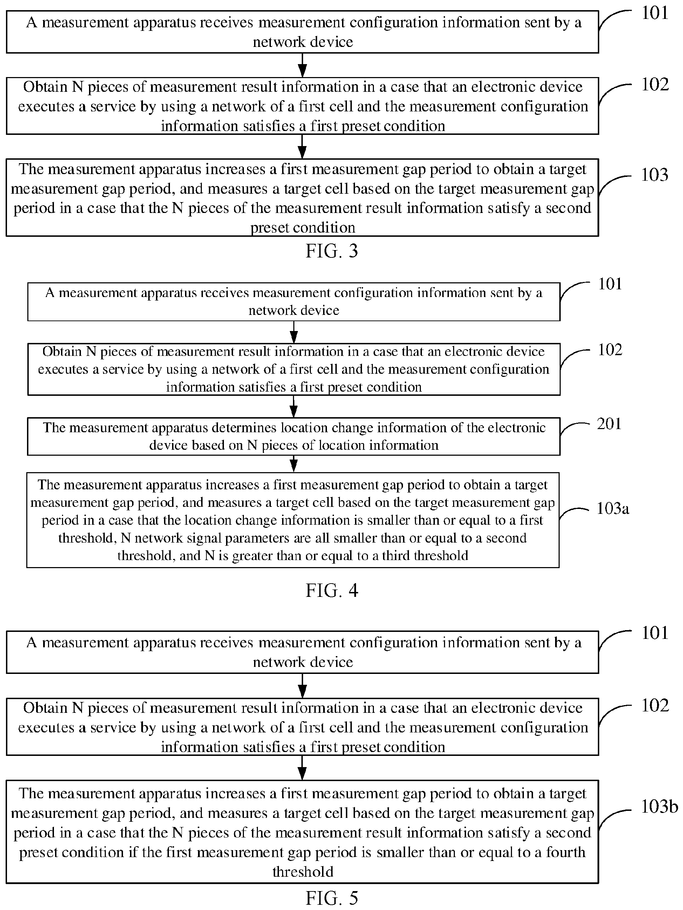

FIG. 3 is a flowchart of a measurement method according to the embodiments of this application. As shown in FIG. 3, the measurement method provided in the embodiments of this application includes the following step 101 to step 103.

Step 101: a measurement apparatus receives measurement configuration information sent by a network device.

Optionally, in the embodiments of this application, in a case that the measurement apparatus is in a network searching state, the measurement apparatus can send a connection establishment request to a network device. The connection establishment request is used to request an establishment of a connection with a cell that supports NSA (for example, a first cell in the following embodiment), so that the network device can send a 5G capability query message to the measurement apparatus based on the connection establishment request. The 5G capability query message is used to request the measurement apparatus to send wireless access capability information of the measurement apparatus in certain radio access technologies (radio access technology, RAT). In this case, the measurement apparatus can send a measurement apparatus capability information (UE capability information) message to the network device based on the 5G capability query message. Therefore, the network device can determine whether the measurement apparatus supports 5G based on the measurement apparatus capability information message. In addition, in a case that the measurement apparatus supports 5G, the network device sends a connection establishment response to the measurement apparatus, and the connection establishment response is used to indicate a successful connection establishment. In addition, the network device sends the measurement configuration information to the measurement apparatus, so that the measurement apparatus can receive the measurement configuration information.

It should be noted that the "network searching state" can be understood as a state in which the measurement apparatus searches a network before obtaining a network service, or a state in which the measurement apparatus searches a network before connecting to the network. For example, the "network searching state" may be a state in which the measurement apparatus is turned on again, or a state of the measurement apparatus when an airplane mode is turned off after the airplane mode is turned on.

In the embodiments of this application, the measurement configuration information includes a first measurement gap period and an identity of a target cell.

It should be noted that the foregoing "measurement gap period" may be understood as a time interval between a moment after the measurement apparatus performs an inter-frequency measurement and a moment when the measurement apparatus performs the inter-frequency measurement again if a to-be-measured cell does not satisfy the condition for reporting.

Optionally, in the embodiments of this application, the identity of the target cell may be physical cell identities (physical cell identities, PCI) of the target cell.

Optionally, in the embodiments of this application, the target cell may be a secondary cell or a non-serving cell of the measurement apparatus.

Further, optionally, in the embodiments of this application, the target cell may specifically be: an NR cell.

Step 102: obtain N pieces of measurement result information in a case that the measurement apparatus executes a service by using a network of a first cell and the measurement configuration information satisfies a first preset condition.

Optionally, in the embodiments of this application, the first cell may be a cell that allows the measurement apparatus to perform dual connectivity, and the first cell may be a master cell or a serving cell of the measurement apparatus.

Further, optionally, in the embodiments of this application, the first cell may specifically be: an LTE cell.

Optionally, in the embodiments of this application, the measurement apparatus can detect an application that runs in the background of the measurement apparatus to determine whether the measurement apparatus performs a service by using a network of the first cell. Alternatively, the measurement apparatus can detect a current Internet speed of the measurement apparatus to determine whether the measurement apparatus performs a service by using the network of the first cell.

Further, optionally, in the embodiments of this application, in a case that a quantity of applications that run in the background of the measurement apparatus and that use a data network is greater than or equal to a fifth threshold (for example, 3), the measurement apparatus can determine that the measurement apparatus executes a service by using the network of the first cell. Alternatively, in a case that a current Internet speed is greater than or equal to a sixth threshold (for example, 100KB/s (kilobits/second)), the measurement apparatus can determine that the measurement apparatus executes a service by using the network of the first cell.

Further, optionally, in the embodiments of this application, the fifth threshold and the sixth threshold may be preset thresholds stored in a memory medium of the measurement apparatus.

In the embodiments of this application, the first preset condition includes at least one of the following:
an identity of the target cell in the measurement configuration information matches identities of N cells; and
a duration between a receiving moment of the measurement configuration information and a receiving moment of N pieces of the measurement configuration information is less than or equal to a preset duration.

It should be noted that the "identities of N cells" may be understood as identities of cells corresponding to N measurements performed by the measurement apparatus before the measurement configuration information is received. The "N pieces of the measurement configuration information" may be understood as measurement configuration information received by the measurement apparatus before the measurement configuration information is received.

It may be understood that in a case that the measurement apparatus is attached to the first cell, the network device can send a first piece of measurement configuration information to the measurement apparatus, so that the measurement apparatus can measure a cell indicated by an identity of a cell included in the first piece of measurement configuration information based on the first piece of measurement configuration information (that is, a measurement is performed periodically according to a measurement gap period in the first piece of measurement configuration information). If the cell indicated by the identity of the cell included in the first piece of measurement configuration information does not satisfy the condition for reporting, the measurement apparatus does not send a measurement report to the network device, so that the network device can send a deletion instruction to the measurement apparatus after a certain period of time. The deletion instruction is used to indicate that the measurement apparatus deletes the first measurement configuration information and a second piece of measurement configuration information is sent to the measurement apparatus again, so that the measurement apparatus can measure a cell indicated by an identity of a cell included in the second piece of measurement configuration information again based on the second piece of measurement configuration information (that is, a measurement is performed periodically according to a measurement gap period in the second piece of measurement configuration information). Similar steps are performed until the network device sends an Nth piece of measurement configuration information to the measurement apparatus. In this way, the measurement apparatus can copy each piece of measurement configuration information in the memory medium of the measurement apparatus after each piece of measurement configuration information is received, so that the measurement apparatus can determine whether the measurement configuration information (that is, the measurement configuration information received by the measurement apparatus in step 101) satisfies the first preset condition based on each piece of measurement configuration information.

Optionally, in the embodiments of this application, the measurement apparatus can detect the N pieces of the measurement configuration information to obtain identities of N cells, so that the measurement apparatus can determine whether the identity of the target cell in the measurement configuration information matches the identities of the N cells (for example, the identity of the target cell in the measurement configuration information is the same as the identities of the N cells). Alternatively, the measurement apparatus can detect the measurement configuration information and the N pieces of measurement configuration information separately to obtain a receiving moment of the measurement configuration information and a receiving time of the N pieces of measurement configuration information. Therefore, the measurement apparatus can determine whether a duration between the receiving moment of the measurement configuration information and the receiving moment of the N pieces of the measurement configuration information is less than or equal to a preset duration (for example, 60 seconds).

In the embodiments of this application, if the measurement apparatus executes a service by using the network of the first cell and the measurement configuration information satisfies the first preset condition, it can be considered that the measurement apparatus needs to transmit service data by using the network, and the measurement apparatus measures a same cell (that is, the target cell) more frequently (that is, the measurement apparatus may be located in an area on the edge of the target cell). Therefore, the measurement apparatus can obtain the N pieces of the measurement result information to further determine whether the measurement apparatus is located in an area on the edge of the target cell (that is, whether a network signal of the target cell is poor).

In the embodiments of this application, the N pieces of the measurement result information are result information of the N measurements performed by the measurement apparatus on the target cell before the measurement configuration information is received, and N is a positive integer.

Optionally, in the embodiments of this application, for each of the N pieces of the measurement result information, one piece of measurement result information may include at least one of the following: one piece of location information and a network signal parameter. The one piece of location information is used to indicate a location of the measurement apparatus when one measurement is performed on the target cell, and the network signal parameter is a network signal parameter of a network of the target cell that is obtained from one measurement that is performed on the target cell.

Further, optionally, in the embodiments of this application, for each of the N pieces of the measurement result information, one piece of location information in one piece of measurement result information may be average location information of at least one piece of location information obtained from a measurement (that is, a periodic measurement) performed on the target cell, and one network signal parameter may be an average network signal parameter of at least one network signal parameter obtained from one measurement (that is, a periodic measurement) performed on the target cell.

Specifically, one network signal parameter may include at least one of the following: a reference signal receiving power (reference signal receiving power, RSRP) value, a reference signal receiving quality (reference signal receiving quality, RSRQ) value, and a signal-to-noise ratio of a reference signal.

Optionally, in the embodiments of this application, for each of the N pieces of the measurement result information, after the measurement apparatus performs one measurement on the target cell, the measurement apparatus can store one piece of measurement result information in the memory medium of the measurement apparatus to store N pieces of measurement result information, so that the measurement apparatus can obtain the N pieces of the measurement result information from the memory medium.

Step 103: the measurement apparatus increases the first measurement gap period to obtain a target measurement gap period, and measures the target cell based on the target measurement gap period in a case that the N pieces of the measurement result information satisfy a second preset condition.

In the embodiments of this application, the second preset condition includes at least one of the following:
a preset positional relationship is satisfied between the N pieces of location information;
a first preset size relationship is satisfied between the N network signal parameters and a certain threshold (for example, a second threshold in the following embodiment); and
a second preset size relationship is satisfied between a quantity corresponding to the N pieces of the measurement result information and another threshold (for example, a third threshold in the following embodiment).

In the embodiments of this application, if the N pieces of the measurement result information satisfy the second preset condition, it can be determined that the measurement apparatus is located in an area on the edge of the target cell (that is, a network signal of the target cell is poor). Therefore, the measurement apparatus can increase the first measurement gap period.

Optionally, in the embodiments of this application, the measurement apparatus can increase the first measurement gap period based on a preset multiple, or increase the first measurement gap period based on a preset period.

For example, it is assumed that the first measurement gap period is 40 milliseconds (ms).

The measurement apparatus can increase the first measurement gap period based on a preset multiple (for example, 2 times), that is, the target measurement gap period is: 40*2=80ms.

Alternatively, the measurement apparatus can increase the first measurement gap period based on a preset period (for example, 20ms), that is, the target measurement gap period is: 40+20=60ms.

Optionally, in the embodiments of this application, if the target measurement gap period is greater than or equal to a certain preset threshold (for example, a fourth threshold in the following embodiment), the measurement apparatus can determine the certain preset threshold as the target measurement gap period.

It may be understood that the certain preset threshold may be a configurable maximum measurement gap period of the measured target cell. If the target measurement gap period is greater than the maximum measurement gap period, the maximum measurement gap period is used as the target measurement gap period, so that the measurement apparatus can measure the target cell based on the maximum measurement gap period.

Optionally, in the embodiments of this application, after the measurement apparatus increases the first measurement gap period, the measurement apparatus can interrupt the transmission of the service data performed by using the network of the first cell, and adjust the frequency of the receiver of the measurement apparatus from the frequency of the first cell to the frequency of the target cell to measure the target cell. If the target cell does not satisfy the condition for reporting in the measurement configuration information, the measurement apparatus can restore the frequency of the receiver to the frequency of the first cell and continue to transmit the service data by using the network of the first cell. After the target measurement gap period, the foregoing steps are repeated until a certain cell in the target cell satisfies the condition for reporting.

In the embodiments of this application, in a case that it is determined that the network signal of the target cell is poor, the measurement apparatus can increase the first measurement gap period and measure the target cell based on the target measurement gap period. In this way, in a case that the target cell does not satisfy the condition for reporting in the measurement configuration information, the measurement apparatus can measure the target cell again after a long time.

In the measurement method provided in the embodiments of this application, the measurement apparatus can receive the measurement configuration information sent by the network device, and in a case that the measurement apparatus executes a service by using the network of the first cell and the measurement configuration information satisfies the first preset condition, the measurement apparatus can obtain the N pieces of the measurement result information of the N measurements that have been performed on the target cell corresponding to the measurement configuration information (that is, before the measurement apparatus receives the measurement configuration information). In addition, in a case that the N pieces of the measurement result information satisfy the second preset condition, the measurement apparatus can increase the first measurement gap period in the measurement configuration information to obtain the target measurement gap period, so as to measure the target cell based on the target measurement gap period. In a case that the measurement apparatus can execute a service by using the network of the first cell and the measurement configuration information satisfies the first preset condition, because the measurement apparatus can, based on the measurement configuration information, determine that the measurement apparatus can transmit service data by using the network of the first cell and the network signal of the target cell may be poor, the measurement apparatus can obtain the measurement result information of the N measurements that have been performed on the target cell and determine whether the measurement result information of the N measurements satisfies the second preset condition, so as to determine whether the network signal of the target cell is poor. In addition, in a case that the network signal of the target cell is poor, the measurement apparatus can increase the first measurement gap period and measure the target cell based on the target measurement gap period. In this way, in a case that the target cell does not satisfy the condition for reporting in the measurement configuration information, the measurement apparatus can interrupt the transmission of the service data after the frequency of the receiver is restored to the frequency of the first cell and the service data is transmitted by the network of the first cell for a long time. Therefore, in a case that the network signal of the target cell is poor, time for the measurement apparatus to transmit the service data can be increased. In this case, the delay for the measurement apparatus to transmit the service data can be reduced.

The following uses an example in which the second preset condition includes: a preset positional relationship is satisfied between the N pieces of location information; a first preset size relationship is satisfied between the N network signal parameters and a certain threshold; and a second preset size relationship is satisfied between a quantity corresponding to the N pieces of the measurement result information and another threshold for description.

Optionally, in the embodiments of this application, each of the N pieces of the measurement result information includes one piece of location information and a network signal parameter. The one piece of location information is used to indicate a location of the measurement apparatus when one measurement is performed on the target cell, and the network signal parameter is a network signal parameter of a network of the target cell that is obtained from one measurement that is performed on the target cell. Specifically, with reference to FIG. 3, as shown in FIG. 4, before the foregoing step 103, the measurement method provided in the embodiments of this application may further include step 201, and specifically step 103 may be implemented by performing the following step 103a.

Step 201: the measurement apparatus determines location change information of the measurement apparatus based on the N pieces of location information.

Further, optionally, in the embodiments of this application, the measurement apparatus can determine the first piece of location change information based on the first piece of location information and the second piece of location information, determine the second piece of location change information based on the second piece of location information and the third piece of location information, and determine the third piece of location change information based on the third piece of location information and the fourth piece of location information. Similar steps are performed until the N-1th piece of location change information is determined based on the N-1th piece of location information and the Nth piece of location information. Then, the measurement can determine the location change information of the measurement apparatus based on N-1 pieces of the location change information.

Specifically, the measurement apparatus can determine information of the greatest location change in the N-1 pieces of location change information as the location change information of the measurement apparatus. Alternatively, the measurement apparatus can determine average location change information of the N-1 pieces of location change information as the location change information of the measurement apparatus.

Step 103a: in a case that the location change information is less than or equal to a first threshold, N network signal parameters are all less than or equal to a second threshold, and N is greater than or equal to a third threshold, the measurement apparatus increases the first measurement gap period to obtain the target measurement gap period, and measures the target cell based on the target measurement gap period.

Further, optionally, in the embodiments of this application, the first threshold (for example, 30 meters), the second threshold, and the third threshold (for example, 3 meters) may all be preset thresholds stored in the memory medium of the measurement apparatus.

**In** the embodiments of this application, if the location change information is less than or equal to the first threshold, the N network signal parameters are all less than or equal to the second threshold, and N is greater than or equal to the third threshold, it can be considered that location movement of the measurement apparatus is not significant, the network signal of the target cell is poor, and the measurement apparatus has measured the target cell multiple times. Therefore, the measurement apparatus can increase the first measurement gap period to increase the time for the measurement apparatus to transmit the service data.

It can be learned that the measurement apparatus can determine multiple times whether the network signal of the target cell is poor, and the first measurement gap period is only increased in a case that it is determined that the network signal of the target cell is poor. Therefore, it can be avoided that the measurement apparatus increases the first measurement gap period in a case that the network signal of the target cell is strong, thereby reducing the delay for the measurement apparatus to transmit the service data.

The measurement apparatus can increase the first measurement gap period, and can also reduce a first measurement gap duration in the measurement configuration information to increase the time for the measurement apparatus to transmit the service data in a case that the network signal of the target cell is poor.

Optionally, in the embodiments of this application, the measurement configuration information further includes a first measurement gap duration. Specifically, with reference to FIG. 3, as shown in FIG. 5, the foregoing step 103 may be specifically implemented by performing the following step 103b.

Step 103b: in a case that the N pieces of the measurement result information satisfy the second preset condition, if the first measurement gap period is less than or equal to a fourth threshold, the measurement apparatus increases the first measurement gap period to obtain the target measurement gap period, and measure the target cell based on the target measurement gap period.

Further, optionally, in the embodiments of this application, the fourth threshold (for example, 160ms) may be a preset threshold stored in the memory medium of the measurement apparatus.

It may be understood that the fourth threshold is a configurable maximum measurement gap period of the measured target cell.

In the embodiments of this application, if the first measurement gap period is greater than the configurable maximum measurement gap period of the measured target cell, the measurement on the target cell may fail. Therefore, the measurement apparatus can increase the first measurement gap period in a case that the first measurement gap period is less than or equal to the configurable maximum measurement gap period.

It can be learned that the measurement apparatus only increases the first measurement gap period in a case that the first measurement gap period is less than or equal to the configurable maximum measurement gap period. Therefore, it can be avoided that the measurement on the target cell fails because the target measurement gap period is greater than the configurable maximum measurement gap period of the measured target cell. Therefore, the delay for the measurement apparatus to transmit the service data can be reduced while accuracy of the measurement apparatus performing a measurement is not reduced.

Optionally, in the embodiments of this application, the foregoing step 103b may be replaced by the following step 301.

Step 301: in a case that the N pieces of the measurement result information satisfy the second preset condition, if the first measurement gap period is greater than the fourth threshold, the measurement apparatus reduces the first measurement gap duration to obtain a target measurement gap duration, and measures the target cell based on the target measurement gap duration.

It may be understood that if the first measurement gap period is greater than the fourth threshold, it can be considered that the first measurement gap period is greater than the configurable maximum measurement gap period of the measured target cell. Therefore, the measurement apparatus can reduce the first measurement gap duration.

It should be noted that the "measurement gap duration" may be understood as a period of time during which the measurement apparatus performs an inter-frequency measurement, and during this period of time, the measurement apparatus can only receive a signal from a corresponding to-be-measured cell and the service data cannot be transmitted.

Further, optionally, in the embodiments of this application, the measurement apparatus can reduce the first measurement gap duration based on a preset multiple, or reduce the first measurement gap duration based on a preset duration.

For example, it is assumed that the first measurement gap duration is 6 milliseconds (ms).

The measurement apparatus can reduce the first measurement gap duration based on a preset multiple (for example, 1/2 times), that is, the target measurement gap duration is: 6*l/2=3ms.

The measurement apparatus can reduce the first measurement gap duration based on a preset duration (for example, 2ms), that is, the target measurement gap duration is 6-2=4ms.

Further, optionally, in the embodiments of this application, in a case that the first measurement gap duration is less than a threshold (for example, a fifth threshold in the following embodiment), the measurement apparatus can determine the preset threshold as the target measurement gap duration.

It may be understood that one preset threshold may be a configurable minimum measurement gap duration of the target cell. If the target measurement gap duration is less than the minimum measurement gap duration, the minimum measurement gap duration is used as the target measurement gap duration, so that the measurement apparatus can measure the target cell based on the minimum measurement gap duration.

Further, optionally, in the embodiments of this application, after the measurement apparatus reduces the first measurement gap duration, the measurement apparatus can interrupt the transmission of the service data by using the network of the first cell, and adjust the frequency of the receiver of the measurement apparatus from the frequency of the first cell to the frequency of the target cell to measure the target measurement gap duration of the target cell. If the target cell does not satisfy the condition for reporting in the measurement configuration information, the measurement apparatus can restore the frequency of the receiver to the frequency of the first cell and continue to transmit the service data by using the network of the first cell. After the first measurement gap period, the foregoing steps are repeated until a certain cell in the target cell satisfies the condition for reporting.

In the embodiments of this application, in a case that it is determined that the network signal of the target cell is poor, the measurement apparatus can reduce the first measurement gap duration and perform a shorter measurement on the target cell. In addition, in a case that the target cell does not satisfy the condition for reporting in the measurement configuration information, the measurement apparatus can perform a shorter measurement again after the first measurement gap period.

It can be learned that the measurement apparatus can reduce the first measurement gap duration in a case that the first measurement gap period is greater than the configurable maximum measurement gap period. Therefore, while it is avoided that the measurement on the target cell fails because the reduced first measurement gap period is greater than the configurable maximum measurement gap period of the measured target cell, time during which the measurement apparatus interrupts the transmission of the service data is reduced. Therefore, the delay for the measurement apparatus to transmit the service data can be reduced while accuracy of the measurement apparatus performing a measurement is not reduced.

Optionally, in the embodiments of this application, the foregoing step 301 can be specifically implemented by performing the following step 301a.

Step 301a: in a case that the N pieces of the measurement result information satisfy the second preset condition, if the first measurement gap period is greater than the fourth threshold, the measurement apparatus reduces the first measurement gap duration in a case that the first measurement gap duration is greater than or equal to the fifth threshold to obtain a target measurement gap duration, and measures the target cell based on the target measurement gap duration.

Further, optionally, in the embodiments of this application, the fifth threshold (for example, 1.5ms) may be a preset threshold stored in the memory medium of the measurement apparatus.

It may be understood that the fifth threshold is a configurable minimum measurement gap duration of the measured target cell.

In the embodiments of this application, if the first measurement gap duration is less than the configurable minimum measurement gap duration of the measured target cell, the measurement on the target cell may fail. Therefore, the measurement apparatus can reduce the first measurement gap duration in a case that the first measurement gap duration is greater than or equal to the configurable minimum measurement gap duration.

It can be learned that the measurement apparatus only reduces the first measurement gap duration in a case that the first measurement gap duration is greater than or equal to the configurable minimum measurement gap duration. Therefore, it can be avoided that the measurement on the target cell fails because the target measurement gap duration is less than the configurable minimum measurement gap duration of the measured target cell. Therefore, the delay for the measurement apparatus to transmit the service data can be reduced while accuracy of the measurement apparatus performing a measurement is not reduced.

The measurement apparatus can adjust the measurement gap period (or the measurement gap duration) in the measurement configuration information, and can also prohibit the measurement on the target cell to avoid that the transmission of the service data is interrupted.

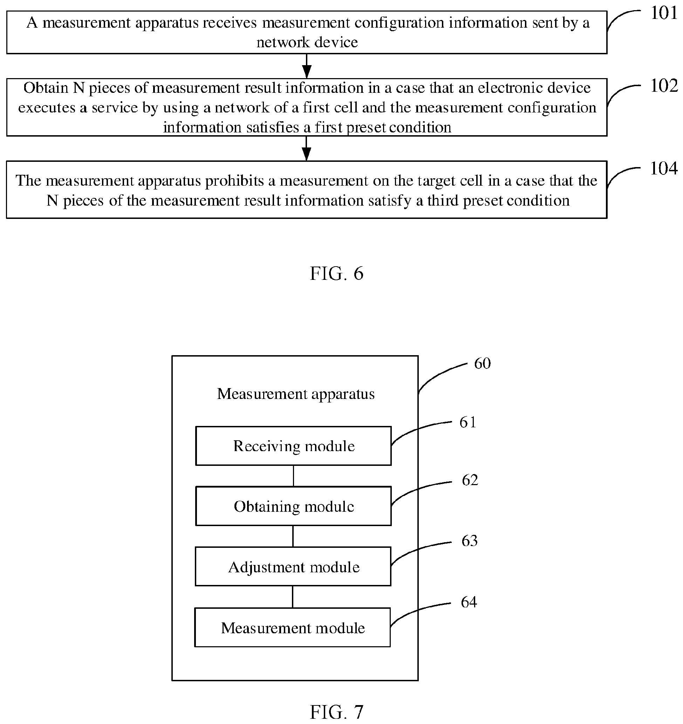

Optionally, in the embodiments of this application, with reference to FIG. 3, as shown in FIG. 6, after the foregoing step 102, the measurement method provided in the embodiments of this application may further include the following step 104.

Step 104: the measurement apparatus prohibits a measurement on the target cell in a case that the N pieces of the measurement result information satisfy a third preset condition.

It may be understood that the foregoing step 103 may be replaced with step 104.

Further, optionally, in the embodiments of this application, the third preset condition may be that the N network signal parameters in the N pieces of the measurement result information are less than or equal to a seventh threshold, and N is greater than or equal to an eighth threshold.

Further, optionally, in the embodiments of this application, the seventh threshold and the eighth threshold may all be preset thresholds stored in the memory medium of the measurement apparatus.

In the embodiments of this application, if the N pieces of the measurement result information satisfy the third preset condition, it can be considered that the network signal of the target cell is poor, and the measurement apparatus has measured the target cell multiple times. Therefore, the measurement apparatus can prohibit the measurement on the target cell.

It can be learned that because the measurement apparatus can prohibit the measurement on the target cell in a case that the network signal of the target cell is poor and the measurement apparatus has measured the target cell multiple times, that is, the measurement apparatus does not need to adjust the frequency of the receiver from the frequency of the first cell to the frequency of the target cell. Therefore, the measurement apparatus does not need to interrupt the transmission of the service data, thereby reducing the delay for the measurement apparatus to transmit the service data.

It should be noted that an execution subject of the measurement method according to the embodiments of this application may be the measurement apparatus in the foregoing embodiments, or a control module for performing the measurement method in the measurement apparatus. In the embodiments of this application, the measurement apparatus according to the embodiments of this application is described by using an example in which the measurement apparatus performs the measurement method.

FIG. 7 is a possible schematic structural diagram of a measurement apparatus according to the embodiments of this application. As shown in FIG. 7, the measurement apparatus 60 includes a receiving module 61, an obtaining module 62, an adjustment module 63, and a measurement module 64.

The receiving module 61 is configured to receive measurement configuration information sent by a network device, where the measurement configuration information includes a first measurement gap period and an identity of a target cell. The obtaining module 62 is configured to obtain N pieces of measurement result information in a case that the measurement apparatus 60 executes a service by using a network of a first cell and the measurement configuration information received by the receiving module 61 satisfies a first preset condition, where the N pieces of the measurement result information are result information of N measurements performed by the measurement apparatus 60 on the target cell before the measurement configuration information is received, and N is a positive integer. The adjustment module 63 is configured to increase the first measurement gap period to obtain a target measurement gap period in a case that the N pieces of the measurement result information obtained by the obtaining module 62 satisfy a second preset condition. The measurement module 64 is configured to measure the target cell based on the target measurement gap period obtained after the adjustment module 63 increases the first measurement gap period.

In some embodiments, each of the N pieces of the measurement result information includes one piece of location information and a network signal parameter. The one piece of location information is used to indicate a location of the measurement apparatus 60 when one measurement is performed on the target cell, and the network signal parameter is a network signal parameter of a network of the target cell that is obtained from one measurement that is performed on the target cell. The measurement apparatus 60 provided in the embodiments of this application may further include a determining module. The determining module is configured to determine location change information of the measurement apparatus 60 based on N pieces of location information. The adjustment module 63 is specifically configured to increase the first measurement gap period in a case that the location change information determined by the determining module is less than or equal to a first threshold, N network signal parameters are all less than or equal to a second threshold, and N is greater than or equal to a third threshold.

In some embodiments, the measurement configuration information further includes a first measurement gap duration. The adjustment module 63 is specifically configured to increase the first measurement gap period in a case that the first measurement gap period is less than or equal to a fourth threshold. The adjustment module 63 is further configured to reduce the first measurement gap duration to obtain a target measurement gap duration in a case that the first measurement gap period is greater than the fourth threshold. The measurement module 64 is further configured to measure the target cell based on the target measurement gap duration obtained after the adjustment module 63 reduces the first measurement gap duration.

In some embodiments, the adjustment module 63 is specifically configured to reduce the first measurement gap duration in a case that the first measurement gap duration is greater than or equal to a fifth threshold.

In some embodiments, the measurement apparatus 60 provided in the embodiments of this application further includes a prohibiting module. The prohibiting module is configured to prohibit measurement on the target cell in a case that the N pieces of the measurement result information satisfy a third preset condition.

In the measurement apparatus provided in the embodiments of this application, in a case that the measurement apparatus can execute a service by using the network of the first cell and the measurement configuration information satisfies the first preset condition, because the measurement apparatus can, based on the measurement configuration information, determine that the measurement apparatus can transmit service data by using the network of the first cell and the network signal of the target cell may be poor, the measurement apparatus can obtain the measurement result information of the N measurements that have been performed on the target cell and determine whether the measurement result information of the N measurements satisfies the second preset condition, so as to determine whether the network signal of the target cell is poor. In addition, in a case that the network signal of the target cell is poor, the measurement apparatus can increase the first measurement gap period and measure the target cell based on the target measurement gap period. In this way, in a case that the target cell does not satisfy the condition for reporting in the measurement configuration information, the measurement apparatus can interrupt the transmission of the service data after the frequency of the receiver is restored to the frequency of the first cell and the service data is transmitted by the network of the first cell for a long time. Therefore, in a case that the network signal of the target cell is poor, the measurement apparatus can increase time for the measurement apparatus to transmit the service data. In this case, the delay for the measurement apparatus to transmit the service data can be reduced.

The measurement apparatus in the embodiments of this application may be an apparatus, or a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted terminal, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The measurement apparatus in the embodiments of this application may be an apparatus with an operating system. The operating system may be an Android (Android) operating system, may be an iOS operating system, or may be another possible operating system, which is not specifically limited in the embodiments of this application.

The measurement apparatus provided in the embodiments of this application can implement the processes implemented in the method embodiments in FIG. 1 to FIG. 6. To avoid repetition, details are not described herein again.

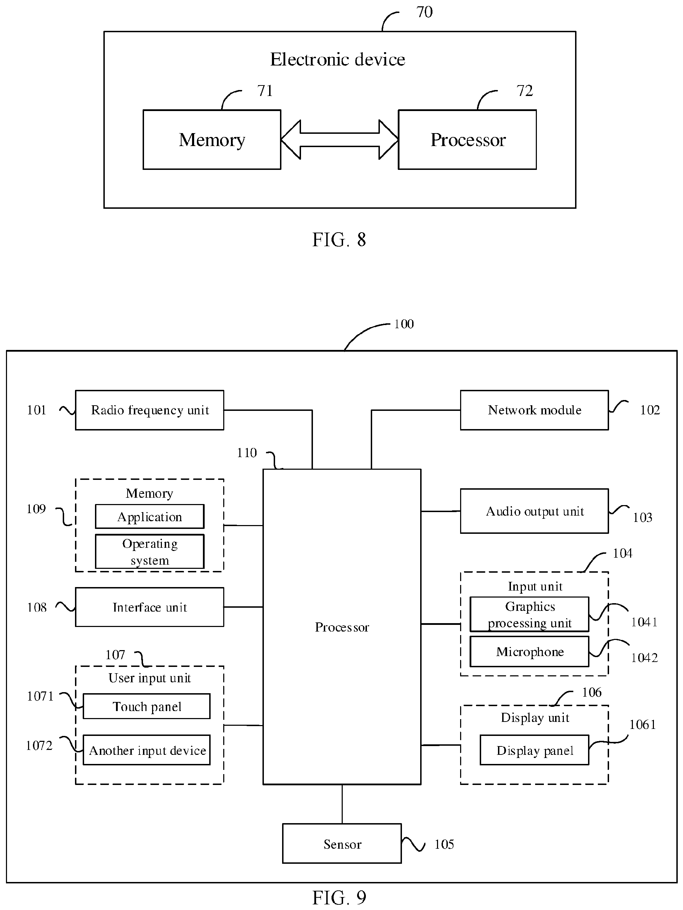

Optionally, as shown in FIG. 8, an embodiment of this application further provides an electronic device 70, including a processor 72, a memory 71, and a program or an instruction stored in the memory 71 and executable on the processor 72. When the program or the instruction is executed by the processor 72, the processes of the foregoing measurement method embodiments are implemented, with the same technical effects achieved. To avoid repetition, details are not described herein again.

It should be noted that the electronic device in the embodiments of this application includes the foregoing mobile electronic device or the non-mobile electronic device.

FIG. 9 is a schematic diagram of a hardware structure of an electronic device according to the embodiments of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include the power supply (for example, a battery) that supplies power to the components. The power supply may be logically connected to the processor 110 through a power management system, so as to implement functions such as charging management, discharging management, and power consumption management through the power management system. The electronic device is not limited to the electronic device structure shown in FIG. 9. The electronic device may include more or fewer components than those shown in the figure, or combine some of the components, or arrange the components differently.

The radio frequency unit 101 is configured to receive measurement configuration information sent by a network device, where the measurement configuration information includes a first measurement gap period and an identity of a target cell.

The processor 110 is configured to obtain N pieces of measurement result information in a case that an electronic device executes a service by using a network of a first cell and the measurement configuration information satisfies a first preset condition, where the N pieces of the measurement result information are result information of N measurements performed by the electronic device on the target cell before the measurement configuration information is received, and N is a positive integer; increase the first measurement gap period to obtain a target measurement gap period in a case that the N pieces of the measurement result information obtained by the obtaining module satisfy a second preset condition; and measure the target cell based on the target measurement gap duration.

In the electronic device provided in the embodiments of this application, in a case that the electronic device can execute a service by using the network of the first cell and the measurement configuration information satisfies the first preset condition, because the electronic device can, based on the measurement configuration information, determine that the electronic device can transmit service data by using the network of the first cell and the network signal of the target cell may be poor, the electronic device can obtain the measurement result information of the N measurements that have been performed on the target cell and determine whether the measurement result information of the N measurements satisfies the second preset condition, so as to determine whether the network signal of the target cell is poor. In addition, in a case that the network signal of the target cell is poor, the electronic device can increase the first measurement gap period and measure the target cell based on the target measurement gap period. In this way, in a case that the target cell does not satisfy the condition for reporting in the measurement configuration information, the electronic device can interrupt the transmission of the service data after the frequency of the receiver is restored to the frequency of the first cell and the service data is transmitted by the network of the first cell for a long time. Therefore, in a case that the network signal of the target cell is poor, the electronic device can increase time for the electronic device to transmit the service data. In this case, the delay for the electronic device to transmit the service data can be reduced.

Optionally, in the embodiments of this application, each of the N pieces of the measurement result information includes one piece of location information and a network signal parameter. The one piece of location information is used to indicate a location of the electronic device when one measurement is performed on the target cell, and the network signal parameter is a network signal parameter of a network of the target cell that is obtained from one measurement that is performed on the target cell.

The processor 110 is further configured to determine location change information of the electronic device based on N pieces of location information.

The processor 110 is specifically configured to increase the first measurement gap period in a case that the location change information is less than or equal to a first threshold, N network signal parameters are all less than or equal to a second threshold, and N is greater than or equal to a third threshold.

It can be learned that the electronic device can determine multiple times whether the network signal of the target cell is poor, and the first measurement gap period is only increased in a case that it is determined that the network signal of the target cell is poor. Therefore, it can be avoided that the electronic device increases the first measurement gap period in a case that the network signal of the target cell is strong, thereby reducing the delay for the electronic device to transmit the service data.

Optionally, in the embodiments of this application, the measurement configuration information further includes a first measurement gap duration.

The processor 110 is specifically configured to increase the first measurement gap period in a case that the first measurement gap period is less than or equal to a fourth threshold.

The processor 110 is specifically configured to reduce the first measurement gap duration to obtain a target measurement gap duration, and measure the target cell based on the target measurement gap duration in a case that the first measurement gap period is greater than the fourth threshold.

It can be learned that the electronic device only reduces the first measurement gap period in a case that the first measurement gap period is less than or equal to the configurable maximum measurement gap period. Therefore, it can be avoided that the measurement on the target cell fails because the target measurement gap period is greater than the configurable maximum measurement gap period of the measured target cell. Therefore, the delay for the electronic device to transmit the service data can be reduced while accuracy of the electronic device performing a measurement is not reduced.

It can be learned that the electronic device can reduce the first measurement gap duration in a case that the first measurement gap period is greater than the configurable maximum measurement gap period. Therefore, while it is avoided that the measurement on the target cell fails because the target measurement gap period is greater than the configurable maximum measurement gap period of the measured target cell, time during which the electronic device interrupts the transmission of the service data is reduced. Therefore, the delay for the electronic device to transmit the service data can be reduced while accuracy of the electronic device performing a measurement is not reduced.

Optionally, in the embodiments of this application, the processor 110 is specifically configured to reduce the first measurement gap duration in a case that the first measurement gap duration is greater than or equal to a fifth threshold.

It can be learned that the electronic device only reduces the first measurement gap duration in a case that the first measurement gap duration is greater than or equal to the configurable minimum measurement gap duration. Therefore, it can be avoided that the measurement on the target cell fails because the target measurement gap duration is less than the configurable minimum measurement gap duration of the measured target cell. Therefore, the delay for the electronic device to transmit the service data can be reduced while accuracy of the electronic device performing a measurement is not reduced.

Optionally, in the embodiments of this application, the processor 110 is configured to prohibit measurement on the target cell in a case that the N pieces of the measurement result information satisfy a third preset condition.

It can be learned that because the electronic device can prohibit the measurement on the target cell in a case that the network signal of the target cell is poor and the electronic device has measured the target cell multiple times, that is, the electronic device does not need to adjust the frequency of the receiver from the frequency of the first cell to the frequency of the target cell. Therefore, the electronic device does not need to interrupt the transmission of the service data, thereby reducing the delay for the electronic device to transmit the service data.

It should be understood that, in the embodiments of this application, the input unit 104 may include a graphics processing unit (graphics processing unit, GPU) 1041 and a microphone 1042, and the graphics processing unit 1041 processes image data of a still picture or video obtained by an image capture apparatus (such as a camera) in a video capture mode or an image capture mode. The display unit 106 may include the display panel 1061. The display panel 1061 may be configured in a form of a liquid crystal display, an organic light-emitting diode, or the like. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein. The memory 109 may be configured to store a software program and various data, including but not limited to an application and an operating system. An application processor and a modem processor may be integrated into the processor 110, the application processor mainly processes an operating system, a user interface, an application, and the like, and the modem processor mainly processes wireless communication. It can be understood that the modem processor may alternatively be not integrated in the processor 110.

An embodiment of this application further provides a readable storage medium. The readable storage medium stores a program or an instruction. When the program or the instruction is executed by a processor, the processes in the foregoing measurement method embodiments are implemented, with the same technical effect achieved. To avoid repetition, details are not described herein again.

The processor is a processor in the electronic device in the foregoing embodiment. The readable storage medium includes a computer-readable storage medium such as a computer read-only memory (read-only memory, ROM), a random access memory (random access memory, RAM), a magnetic disk, or an optical disc.

An embodiment of this application further provides a chip. The chip includes a processor and a communications interface, and the communications interface is coupled to the processor. The processor is configured to run a program or an instruction, to implement various processes of the foregoing measurement method embodiments, with the same technical effects achieved. To avoid repetition, details are not described herein again.

It should be understood that the chip mentioned in this embodiment of the present application may also be referred to as a system-level chip, a system chip, a system on chip, a system chip on chip, and the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of the present application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present application.

The embodiments of this application are described above with reference to the accompanying drawings, but this application is not limited to the above specific implementations, and the above specific implementations are only illustrative and not restrictive. Enlightened by this application, a person of ordinary skill in the art can make many forms without departing from the purpose of this application and the protection scope of the claims, all of which shall fall within the protection of this application.

## Claims

1. A measurement method, performed by an electronic device (10, 110) **characterized in that** the method comprises:
receiving (101) measurement configuration information sent by a network device (11), wherein
the measurement configuration information comprises a first measurement gap period and an identity of a target cell;
obtaining (102) N pieces of measurement result information in a case that the electronic device (10, 110) transmits service data by using a network of a first cell and the measurement configuration information satisfies a first preset condition, wherein
the N pieces of the measurement result information are result information of N measurements performed by the electronic device (10, 110) on the target cell before the measurement configuration information is received, and N is a positive integer; and
increasing (103) the first measurement gap period to obtain a target measurement gap period, and measuring (103) the target cell based on the target measurement gap period in a case that the N pieces of the measurement result information satisfy a second preset condition; wherein
the first preset condition comprises at least one of the following that:
an identity of the target cell in the measurement configuration information matches identities of N cells; and
a duration between a receiving moment of the measurement configuration information and a receiving moment of N pieces of the measurement configuration information is less than or equal to a preset duration; wherein
the identities of the N cells are identities of cells corresponding to N measurements performed by the electronic device (10, 110) before the measurement configuration information is received; and
the second preset condition comprises at least one of the following that:
a preset positional relationship is satisfied between N pieces of location information;
a first preset size relationship is satisfied between N network signal parameters and a second threshold; and
a second preset size relationship is satisfied between a quantity corresponding to the N pieces of the measurement result information and a third threshold.

2. The method according to claim 1, wherein each of the N pieces of the measurement result information comprises one piece of location information and a network signal parameter, the one piece of location information is used to indicate a location of the electronic device (10, 110) when one measurement is performed on the target cell, and the network signal parameter is a network signal parameter of a network of the target cell that is obtained from one measurement that is performed on the target cell;
before the increasing (103) the first measurement gap period in a case that the N pieces of the measurement result information satisfy a second preset condition, the method further comprises:
determining (201) location change information of the electronic device (10, 110) based on N pieces of location information; and
the increasing (103) the first measurement gap period in a case that the N pieces of the measurement result information satisfy a second preset condition comprises:
increasing (103a) the first measurement gap period in a case that the location change information is less than or equal to a first threshold, the N network signal parameters are all less than or equal to the second threshold, and N is greater than or equal to the third threshold.

3. The method according to claim 1 or 2, wherein the measurement configuration information further comprises a first measurement gap duration;
the increasing (103) the first measurement gap period comprises:
increasing (103b) the first measurement gap period in a case that the first measurement gap period is less than or equal to a fourth threshold; and
the method further comprises:
in a case that the first measurement gap period is greater than the fourth threshold, reducing the first measurement gap duration to obtain a target measurement gap duration, and measuring the target cell based on the target measurement gap duration.

4. The method according to claim 3, wherein the reducing the first measurement gap duration comprises:
reducing the first measurement gap duration in a case that the first measurement gap duration is greater than or equal to a fifth threshold.

5. The method according to claim 1, wherein after the obtaining (102) N pieces of measurement result information, the method further comprises:
prohibiting (104) measurement on the target cell in a case that the N pieces of the measurement result information satisfy a third preset condition.

6. A measurement apparatus (60), **characterized in that** the measurement apparatus (60) comprises a receiving module (61), an obtaining module (62), an adjustment module (63), and a measurement module (64);
the receiving module (61) is configured to receive measurement configuration information sent by a network device, wherein the measurement configuration information comprises a first measurement gap period and an identity of a target cell;
the obtaining module (62) is configured to obtain N pieces of measurement result information in a case that the measurement apparatus (60) transmits service data by using a network of a first cell and the measurement configuration information received by the receiving module (61) satisfies a first preset condition, wherein
the N pieces of the measurement result information are result information of N measurements performed by the measurement apparatus (60) on the target cell before the measurement configuration information is received, and N is a positive integer;
the adjustment module (63) is configured to increase the first measurement gap period to obtain a target measurement gap period in a case that the N pieces of the measurement result information obtained by the obtaining module (62) satisfy a second preset condition; and
the measurement module (64) is configured to measure the target cell based on the target measurement gap period obtained after the adjustment module (63) increases the first measurement gap period; wherein
the first preset condition comprises at least one of the following that:
an identity of the target cell in the measurement configuration information matches identities of N cells; and
a duration between a receiving moment of the measurement configuration information and a receiving moment of N pieces of the measurement configuration information is less than or equal to a preset duration; wherein
the identities of the N cells are identities of cells corresponding to N measurements performed by the measurement apparatus (60) before the measurement configuration information is received; and
the second preset condition comprises at least one of the following that:
a preset positional relationship is satisfied between N pieces of location information;
a first preset size relationship is satisfied between N network signal parameters and a second threshold; and
a second preset size relationship is satisfied between a quantity corresponding to the N pieces of the measurement result information and a third threshold.

7. The measurement apparatus (60) according to claim 6, wherein each of the N pieces of the measurement result information comprises one piece of location information and a network signal parameter, the one piece of location information is used to indicate a location of the measurement apparatus (60) when one measurement is performed on the target cell, and the network signal parameter is a network signal parameter of a network of the target cell that is obtained from one measurement that is performed on the target cell;
the measurement apparatus (60) further comprises a determining module;
the determining module is configured to determine location change information of the measurement apparatus (60) based on N pieces of location information; and
the adjustment module (63) is specifically configured to increase the first measurement gap period in a case that the location change information determined by the determining module is less than or equal to a first threshold, the N network signal parameters are all less than or equal to the second threshold, and N is greater than or equal to the third threshold.

8. The measurement apparatus (60) according to claim 6 or 7, wherein the measurement configuration information further comprises a first measurement gap duration;
the adjustment module (63) is specifically configured to increase the first measurement gap period in a case that the first measurement gap period is less than or equal to a fourth threshold;
the adjustment module (63) is further configured to reduce the first measurement gap duration to obtain a target measurement gap duration in a case that the first measurement gap period is greater than the fourth threshold; and
the measurement module (64) is further configured to measure the target cell based on the target measurement gap duration obtained after the adjustment module (63) reduces the first measurement gap duration.

9. The measurement apparatus (60) according to claim 8, wherein the adjustment module (63) is specifically configured to reduce the first measurement gap duration in a case that the first measurement gap duration is greater than or equal to a fifth threshold.

10. The measurement apparatus (60) according to claim 6, wherein the measurement apparatus (60) further comprises a prohibiting module; and
the prohibiting module is configured to prohibit measurement on the target cell in a case that the N pieces of the measurement result information satisfy a third preset condition.

11. An electronic device (70, 100), comprising a processor (72, 110), a memory (71, 109), and a program or an instruction stored in the memory (71, 109) and executable on the processor (72, 110), wherein when the program or the instruction is executed by the processor (72, 110), steps of the measurement method according to any one of claims 1 to 5 are implemented.

12. A readable storage medium, wherein the readable storage medium stores a program or an instruction, and when the program or the instruction is executed by a processor (72, 110) of an electronic device (70, 100), steps of the measurement method according to any one of claims 1 to 5 are implemented.

13. A chip, wherein the chip comprises a processor and a communications interface, the communications interface is coupled to the processor, and the processor is configured to run a program or an instruction, to implement steps of the measurement method according to any one of claims 1 to 5.

14. A computer program product, wherein the computer program product is stored in a non-volatile storage medium, and the computer program product is executed by at least one processor (72, 110) of an electronic device (70, 100), to implement steps of the measurement method according to any one of claims 1 to 5.

## Patentansprüche

1. Ein Messverfahren, das von einer elektronischen Vorrichtung (10, 110) durchgeführt wird, **dadurch gekennzeichnet, dass** das Verfahren Folgendes beinhaltet:
Empfangen (101) von Messkonfigurationsinformationen, die von einer Netzwerkvorrichtung (11) gesendet werden, wobei
die Messkonfigurationsinformationen eine erste Messlückenperiode und eine Identität einer Zielzelle beinhalten;
Erhalten (102) von N Messergebnisinformationselementen in einem Fall, dass die elektronische Vorrichtung (10, 110) Dienstdaten unter Verwendung eines Netzwerks einer ersten Zelle überträgt und die Messkonfigurationsinformationen eine erste vorgegebene Bedingung erfüllen, wobei
die N Messergebnisinformationselemente Ergebnisinformationen von N Messungen sind, die von der elektronischen Vorrichtung (10, 110) an der Zielzelle durchgeführt werden, bevor die Messkonfigurationsinformationen empfangen werden, und N eine positive ganze Zahl ist; und
Vergrößern (103) der ersten Messlückenperiode, um eine Zielmesslückenperiode zu erhalten, und Messen (103) der Zielzelle auf der Basis der Zielmesslückenperiode in einem Fall, dass die N Messergebnisinformationselemente eine zweite vorgegebene Bedingung erfüllen; wobei
die erste vorgegebene Bedingung mindestens eine der Folgenden beinhaltet: dass eine Identität der Zielzelle in den Messkonfigurationsinformationen mit Identitäten von N Zellen übereinstimmt; und
eine Dauer zwischen einem Empfangsmoment der Messkonfigurationsinformationen und einem Empfangsmoment von N Messkonfigurationsinformationselementen kleiner als oder gleich einer vorgegebenen Dauer ist; wobei
die Identitäten der N Zellen Identitäten von Zellen sind, die N Messungen entsprechen, die von der elektronischen Vorrichtung (10, 110) durchgeführt werden, bevor die Messkonfigurationsinformationen empfangen werden; und
die zweite vorgegebene Bedingung mindestens eine der Folgenden beinhaltet: dass eine vorgegebene Positionsbeziehung zwischen N Ortsinformationselementen erfüllt ist;
eine erste vorgegebene Größenbeziehung zwischen N Netzwerksignalparametern und einem zweiten Schwellenwert erfüllt ist; und
eine zweite vorgegebene Größenbeziehung zwischen einer Quantität, die den N Messergebnisinformationselementen entspricht, und einem dritten Schwellenwert erfüllt ist.

2. Verfahren gemäß Anspruch 1, wobei jedes der N Messergebnisinformationselemente ein Ortsinformationselement und einen Netzwerksignalparameter beinhaltet, wobei das eine Ortsinformationselement verwendet wird, um einen Ort der elektronischen Vorrichtung (10, 110) anzugeben, wenn eine Messung an der Zielzelle durchgeführt wird, und der Netzwerksignalparameter ein Netzwerksignalparameter eines Netzwerks der Zielzelle ist, der aus einer Messung erhalten wird, die an der Zielzelle durchgeführt wird;
wobei das Verfahren in einem Fall, dass die N Messergebnisinformationselemente eine zweite vorgegebene Bedingung erfüllen, vor dem Vergrößern (103) der ersten Messlückenperiode ferner Folgendes beinhaltet:
Bestimmen (201) von Ortsänderungsinformationen der elektronischen Vorrichtung (10, 110) auf der Basis von N Ortsinformationselementen; und
wobei das Vergrößern (103) der ersten Messlückenperiode in einem Fall, dass die N Messergebnisinformationselemente eine zweite vorgegebene Bedingung erfüllen, Folgendes beinhaltet:
Vergrößern (103a) der ersten Messlückenperiode in einem Fall, dass die Ortsänderungsinformationen kleiner als oder gleich einem ersten Schwellenwert sind, die N Netzwerksignalparameter alle kleiner als oder gleich dem zweiten Schwellenwert sind und N größer als oder gleich dem dritten Schwellenwert ist.

3. Verfahren gemäß Anspruch 1 oder 2, wobei die Messkonfigurationsinformationen ferner eine erste Messlückendauer beinhalten;
das Vergrößern (103) der ersten Messlückenperiode Folgendes beinhaltet:
Vergrößern (103b) der ersten Messlückenperiode in einem Fall, dass die erste Messlückenperiode kleiner als oder gleich einem vierten Schwellenwert ist; und
das Verfahren ferner Folgendes beinhaltet:
in einem Fall, dass die erste Messlückenperiode größer als der vierte Schwellenwert ist, Reduzieren der ersten Messlückendauer, um eine Zielmesslückendauer zu erhalten, und Messen der Zielzelle auf der Basis der Zielmesslückendauer.

4. Verfahren gemäß Anspruch 3, wobei das Reduzieren der ersten Messlückendauer Folgendes beinhaltet:
Reduzieren der ersten Messlückendauer in einem Fall, dass die erste Messlückendauer größer als oder gleich einem fünften Schwellenwert ist.

5. Verfahren gemäß Anspruch 1, wobei das Verfahren nach dem Erhalten (102) von N Messergebnisinformationselementen ferner Folgendes beinhaltet:
Unterbinden (104) einer Messung an der Zielzelle in einem Fall, dass die N Messergebnisinformationselemente eine dritte vorgegebene Bedingung erfüllen.

6. Ein Messgerät (60), **dadurch gekennzeichnet, dass** das Messgerät (60) ein Empfangsmodul (61), ein Erhaltungsmodul (62), ein Anpassungsmodul (63) und ein Messmodul (64) beinhaltet;
das Empfangsmodul (61) konfiguriert ist, um Messkonfigurationsinformationen zu empfangen, die von einer Netzwerkvorrichtung gesendet werden, wobei die Messkonfigurationsinformationen eine erste Messlückenperiode und eine Identität einer Zielzelle beinhalten;
das Erhaltungsmodul (62) konfiguriert ist, um in einem Fall, dass das Messgerät (60) Dienstdaten unter Verwendung eines Netzwerks einer ersten Zelle überträgt und die Messkonfigurationsinformationen, die von dem Empfangsmodul (61) empfangen werden, eine erste vorgegebene Bedingung erfüllen, N Messergebnisinformationselemente zu erhalten, wobei
die N Messergebnisinformationselemente Ergebnisinformationen von N Messungen sind, die von dem Messgerät (60) an der Zielzelle durchgeführt werden, bevor die Messkonfigurationsinformationen empfangen werden, und N eine positive ganze Zahl ist;
das Anpassungsmodul (63) konfiguriert ist, um die erste Messlückenperiode zu vergrößern, um in einem Fall, dass die N Messergebnisinformationselemente, die von dem Erhaltungsmodul (62) erhalten werden, eine zweite vorgegebene Bedingung erfüllen, eine Zielmesslückenperiode zu erhalten; und
das Messmodul (64) konfiguriert ist, um auf der Basis der Zielmesslückenperiode, die erhalten wird, nachdem das Anpassungsmodul (63) die erste Messlückenperiode vergrößert hat, die Zielzelle zu messen; wobei
die erste vorgegebene Bedingung mindestens eine der Folgenden beinhaltet: dass eine Identität der Zielzelle in den Messkonfigurationsinformationen mit Identitäten von N Zellen übereinstimmt; und
eine Dauer zwischen einem Empfangsmoment der Messkonfigurationsinformationen und einem Empfangsmoment von N Messkonfigurationsinformationselementen kleiner als oder gleich einer vorgegebenen Dauer ist; wobei
die Identitäten der N Zellen Identitäten von Zellen sind, die N Messungen entsprechen, die von dem Messgerät (60) durchgeführt werden, bevor die Messkonfigurationsinformationen empfangen werden; und
die zweite vorgegebene Bedingung mindestens eine der Folgenden beinhaltet: dass eine vorgegebene Positionsbeziehung zwischen N Ortsinformationselementen erfüllt ist;
eine erste vorgegebene Größenbeziehung zwischen N Netzwerksignalparametern und einem zweiten Schwellenwert erfüllt ist; und
eine zweite vorgegebene Größenbeziehung zwischen einer Quantität, die den N Messergebnisinformationselementen entspricht, und einem dritten Schwellenwert erfüllt ist.

7. Messgerät (60) gemäß Anspruch 6, wobei jedes der N
Messergebnisinformationselemente ein Ortsinformationselement und einen Netzwerksignalparameter beinhaltet, wobei das eine Ortsinformationselement verwendet wird, um einen Ort des Messgeräts (60) anzugeben, wenn eine Messung an der Zielzelle durchgeführt wird, und der Netzwerksignalparameter ein Netzwerksignalparameter eines Netzwerks der Zielzelle ist, der aus einer Messung erhalten wird, die an der Zielzelle durchgeführt wird;
das Messgerät (60) ferner ein Bestimmungsmodul beinhaltet;
das Bestimmungsmodul konfiguriert ist, um Ortsänderungsinformationen des Messgeräts (60) auf der Basis von N Ortsinformationselementen zu bestimmen; und das Anpassungsmodul (63) spezifisch konfiguriert ist, um in einem Fall, dass die von dem Bestimmungsmodul bestimmten Ortsänderungsinformationen kleiner als oder gleich einem ersten Schwellenwert sind, die N Netzwerksignalparameter alle kleiner als oder gleich dem zweiten Schwellenwert sind und N größer als oder gleich dem dritten Schwellenwert ist, die erste Messlückenperiode zu vergrößern.

8. Messgerät (60) gemäß Anspruch 6 oder 7, wobei die Messkonfigurationsinformationen ferner eine erste Messlückendauer beinhalten;
das Anpassungsmodul (63) spezifisch konfiguriert ist, um in einem Fall, dass die erste Messlückenperiode kleiner als oder gleich einem vierten Schwellenwert ist, die erste Messlückenperiode zu vergrößern;
das Anpassungsmodul (63) ferner konfiguriert ist, um in einem Fall, dass die erste Messlückenperiode größer als der vierte Schwellenwert ist, die erste Messlückendauer zu reduzieren, um eine Zielmesslückendauer zu erhalten; und
das Messmodul (64) ferner konfiguriert ist, um auf der Basis der Zielmesslückendauer, die erhalten wird, nachdem das Anpassungsmodul (63) die erste Messlückendauer reduziert hat, die Zielzelle zu messen.

9. Messgerät (60) gemäß Anspruch 8, wobei das Anpassungsmodul (63) spezifisch konfiguriert ist, um in einem Fall, dass die erste Messlückendauer größer als oder gleich einem fünften Schwellenwert ist, die erste Messlückendauer zu reduzieren.

10. Messgerät (60) gemäß Anspruch 6, wobei das Messgerät (60) ferner ein Unterbindungsmodul beinhaltet; und
das Unterbindungsmodul konfiguriert ist, um in einem Fall, dass die N Messergebnisinformationselemente eine dritte vorgegebene Bedingung erfüllen, eine Messung an der Zielzelle zu unterbinden.

11. Eine elektronische Vorrichtung (70, 100), die einen Prozessor (72, 110), einen Speicher (71, 109) und ein Programm oder eine Anweisung, das/die in dem Speicher (71, 109) gespeichert ist und auf dem Prozessor (72, 110) ausführbar ist, beinhaltet, wobei, wenn das Programm oder die Anweisung von dem Prozessor (72, 110) ausgeführt wird, Schritte des Messverfahrens gemäß einem der Ansprüche 1 bis 5 implementiert werden.

12. Ein lesbares Speichermedium, wobei das lesbare Speichermedium ein Programm oder eine Anweisung speichert, und wenn das Programm oder die Anweisung von einem Prozessor (72, 110) einer elektronischen Vorrichtung (70, 100) ausgeführt wird, Schritte des Messverfahrens gemäß einem der Ansprüche 1 bis 5 implementiert werden.

13. Ein Chip, wobei der Chip einen Prozessor und eine Kommunikationsschnittstelle beinhaltet, wobei die Kommunikationsschnittstelle mit dem Prozessor gekoppelt ist und der Prozessor konfiguriert ist, um ein Programm oder eine Anweisung auszuführen, um Schritte des Messverfahrens gemäß einem der Ansprüche 1 bis 5 zu implementieren.

14. Ein Computerprogrammprodukt, wobei das Computerprogrammprodukt in einem nichtflüchtigen Speichermedium gespeichert ist und das Computerprogrammprodukt von mindestens einem Prozessor (72, 110) einer elektronischen Vorrichtung (70, 100) ausgeführt wird, um Schritte des Messverfahrens gemäß einem der Ansprüche 1 bis 5 zu implementieren.

## Revendications

1. Un procédé de mesure, effectué par un dispositif électronique (10, 110), **caractérisé en ce que** le procédé comprend :
le fait de recevoir (101) des informations de configuration de mesure envoyées par un dispositif de réseau (11), où
les informations de configuration de mesure comprennent une première période d'intervalle de mesure et une identité d'une cellule cible ;
le fait d'obtenir (102) N éléments d'informations de résultat de mesure dans un cas où le dispositif électronique (10, 110) transmet des données de service en utilisant un réseau d'une première cellule et les informations de configuration de mesure satisfont à une première condition prédéfinie, où
les N éléments des informations de résultat de mesure sont des informations de résultat de N mesures effectuées par le dispositif électronique (10, 110) sur la cellule cible avant que les informations de configuration de mesure ne soient reçues, et N est un entier positif ; et
le fait d'augmenter (103) la première période d'intervalle de mesure pour obtenir une période d'intervalle de mesure cible, et le fait de mesurer (103) la cellule cible sur la base de la période d'intervalle de mesure cible dans un cas où les N éléments des informations de résultat de mesure satisfont à une deuxième condition prédéfinie ; où la première condition prédéfinie comprend au moins l'une des conditions suivantes :
une identité de la cellule cible dans les informations de configuration de mesure concorde avec des identités de N cellules ; et
une durée entre un moment de réception des informations de configuration de mesure et un moment de réception de N éléments des informations de configuration de mesure est inférieure ou égale à une durée prédéfinie ; où
les identités des N cellules sont des identités de cellules correspondant à N mesures effectuées par le dispositif électronique (10, 110) avant que les informations de configuration de mesure ne soient reçues ; et
la deuxième condition prédéfinie comprend au moins l'une des conditions suivantes :
une relation de position prédéfinie est satisfaite entre N éléments d'informations d'emplacement ;
une première relation de taille prédéfinie est satisfaite entre N paramètres de signal de réseau et un deuxième seuil ; et
une deuxième relation de taille prédéfinie est satisfaite entre une quantité correspondant aux N éléments des informations de résultat de mesure et un troisième seuil.

2. Le procédé selon la revendication 1, où chacun des N éléments des informations de résultat de mesure comprend un élément d'informations d'emplacement et un paramètre de signal de réseau, cet élément d'informations d'emplacement est utilisé pour indiquer un emplacement du dispositif électronique (10, 110) lorsqu'une mesure est effectuée sur la cellule cible, et le paramètre de signal de réseau est un paramètre de signal de réseau d'un réseau de la cellule cible qui est obtenu à partir d'une mesure qui est effectuée sur la cellule cible ;
avant le fait d'augmenter (103) la première période d'intervalle de mesure dans un cas où les N éléments des informations de résultat de mesure satisfont à une deuxième condition prédéfinie, le procédé comprend en outre :
le fait de déterminer (201) des informations de modification d'emplacement du dispositif électronique (10, 110) sur la base de N éléments d'informations d'emplacement ; et
le fait d'augmenter (103) la première période d'intervalle de mesure dans un cas où les N éléments des informations de résultat de mesure satisfont à une deuxième condition prédéfinie comprend :
le fait d'augmenter (103a) la première période d'intervalle de mesure dans un cas où les informations de modification d'emplacement sont inférieures ou égales à un premier seuil, les N paramètres de signal de réseau sont tous inférieurs ou égaux au deuxième seuil, et N est supérieur ou égal au troisième seuil.

3. Le procédé selon la revendication 1 ou la revendication 2, où les informations de configuration de mesure comprennent en outre une première durée d'intervalle de mesure ;
le fait d'augmenter (103) la première période d'intervalle de mesure comprend :
le fait d'augmenter (103b) la première période d'intervalle de mesure dans un cas où la première période d'intervalle de mesure est inférieure ou égale à un quatrième seuil ; et
le procédé comprend en outre :
dans un cas où la première période d'intervalle de mesure est supérieure au quatrième seuil, le fait de réduire la première durée d'intervalle de mesure pour obtenir une durée d'intervalle de mesure cible, et le fait de mesurer la cellule cible sur la base de la durée d'intervalle de mesure cible.

4. Le procédé selon la revendication 3, où le fait de réduire la première durée d'intervalle de mesure comprend :
le fait de réduire la première durée d'intervalle de mesure dans un cas où la première durée d'intervalle de mesure est supérieure ou égale à un cinquième seuil.

5. Le procédé selon la revendication 1, où, après le fait d'obtenir (102) N éléments d'informations de résultat de mesure, le procédé comprend en outre :
le fait d'interdire (104) une mesure sur la cellule cible dans un cas où les N éléments des informations de résultat de mesure satisfont à une troisième condition prédéfinie.

6. Un appareil de mesure (60), **caractérisé en ce que** l'appareil de mesure (60) comprend un module de réception (61), un module d'obtention (62), un module de réglage (63), et un module de mesure (64) ;
le module de réception (61) est configuré pour recevoir des informations de configuration de mesure envoyées par un dispositif de réseau, où les informations de configuration de mesure comprennent une première période d'intervalle de mesure et une identité d'une cellule cible ;
le module d'obtention (62) est configuré pour obtenir N éléments d'informations de résultat de mesure dans un cas où l'appareil de mesure (60) transmet des données de service en utilisant un réseau d'une première cellule et les informations de configuration de mesure reçues par le module de réception (61) satisfont à une première condition prédéfinie, où
les N éléments des informations de résultat de mesure sont des informations de résultat de N mesures effectuées par l'appareil de mesure (60) sur la cellule cible avant que les informations de configuration de mesure ne soient reçues, et N est un entier positif ;
le module de réglage (63) est configuré pour augmenter la première période d'intervalle de mesure afin d'obtenir une période d'intervalle de mesure cible dans un cas où les N éléments des informations de résultat de mesure obtenus par le module d'obtention (62) satisfont à une deuxième condition prédéfinie ; et
le module de mesure (64) est configuré pour mesurer la cellule cible sur la base de la période d'intervalle de mesure cible obtenue après que le module de réglage (63) a augmenté la première période d'intervalle de mesure ; où
la première condition prédéfinie comprend au moins l'une des conditions suivantes :
une identité de la cellule cible dans les informations de configuration de mesure concorde avec des identités de N cellules ; et
une durée entre un moment de réception des informations de configuration de mesure et un moment de réception de N éléments des informations de configuration de mesure est inférieure ou égale à une durée prédéfinie ; où
les identités des N cellules sont des identités de cellules correspondant à N mesures effectuées par l'appareil de mesure (60) avant que les informations de configuration de mesure ne soient reçues ; et
la deuxième condition prédéfinie comprend au moins l'une des conditions suivantes :
une relation de position prédéfinie est satisfaite entre N éléments d'informations d'emplacement ;
une première relation de taille prédéfinie est satisfaite entre N paramètres de signal de réseau et un deuxième seuil ; et
une deuxième relation de taille prédéfinie est satisfaite entre une quantité correspondant aux N éléments des informations de résultat de mesure et un troisième seuil.

7. L'appareil de mesure (60) selon la revendication 6, où chacun des N éléments des informations de résultat de mesure comprend un élément d'informations d'emplacement et un paramètre de signal de réseau, cet élément d'informations d'emplacement est utilisé pour indiquer un emplacement de l'appareil de mesure (60) lorsqu'une mesure est effectuée sur la cellule cible, et le paramètre de signal de réseau est un paramètre de signal de réseau d'un réseau de la cellule cible qui est obtenu à partir d'une mesure qui est effectuée sur la cellule cible ;
l'appareil de mesure (60) comprend en outre un module de détermination ;
le module de détermination est configuré pour déterminer des informations de modification d'emplacement de l'appareil de mesure (60) sur la base de N éléments d'informations d'emplacement ; et
le module de réglage (63) est spécifiquement configuré pour augmenter la première période d'intervalle de mesure dans un cas où les informations de modification d'emplacement déterminées par le module de détermination sont inférieures ou égales à un premier seuil, les N paramètres de signal de réseau sont tous inférieurs ou égaux au deuxième seuil, et N est supérieur ou égal au troisième seuil.

8. L'appareil de mesure (60) selon la revendication 6 ou la revendication 7, où les informations de configuration de mesure comprennent en outre une première durée d'intervalle de mesure ;
le module de réglage (63) est spécifiquement configuré pour augmenter la première période d'intervalle de mesure dans un cas où la première période d'intervalle de mesure est inférieure ou égale à un quatrième seuil ;
le module de réglage (63) est en outre configuré pour réduire la première durée d'intervalle de mesure afin d'obtenir une durée d'intervalle de mesure cible dans un cas où la première période d'intervalle de mesure est supérieure au quatrième seuil ; et le module de mesure (64) est en outre configuré pour mesurer la cellule cible sur la base de la durée d'intervalle de mesure cible obtenue après que le module de réglage (63) a réduit la première durée d'intervalle de mesure.

9. L'appareil de mesure (60) selon la revendication 8, où le module de réglage (63) est spécifiquement configuré pour réduire la première durée d'intervalle de mesure dans un cas où la première durée d'intervalle de mesure est supérieure ou égale à un cinquième seuil.

10. L'appareil de mesure (60) selon la revendication 6, l'appareil de mesure (60) comprenant en outre un module d'interdiction ; et
le module d'interdiction étant configuré pour interdire une mesure sur la cellule cible dans un cas où les N éléments des informations de résultat de mesure satisfont à une troisième condition prédéfinie.

11. Un dispositif électronique (70, 100), comprenant un processeur (72, 110), une mémoire (71, 109), et un programme ou une instruction stocké(e) dans la mémoire (71, 109) et exécutable sur le processeur (72, 110), où, lorsque le programme ou l'instruction est exécuté(e) par le processeur (72, 110), des étapes du procédé de mesure selon l'une quelconque des revendications 1 à 5 sont mises en œuvre.

12. Un support de stockage lisible, le support de stockage lisible stockant un programme ou une instruction, et lorsque le programme ou l'instruction est exécuté(e) par un processeur (72, 110) d'un dispositif électronique (70, 100), des étapes du procédé de mesure selon l'une quelconque des revendications 1 à 5 étant mises en œuvre.

13. Une puce, la puce comprenant un processeur et une interface de communication, l'interface de communication étant couplée au processeur, et le processeur étant configuré pour faire tourner un programme ou une instruction, afin de mettre en œuvre des étapes du procédé de mesure selon l'une quelconque des revendications 1 à 5.

14. Un produit-programme informatique, le produit-programme informatique étant stocké dans un support de stockage non volatil, et le produit-programme informatique étant exécuté par au moins un processeur (72, 110) d'un dispositif électronique (70, 100), afin de mettre en œuvre des étapes du procédé de mesure selon l'une quelconque des revendications 1 à 5.
